# EUROPÄISCHE PATENTSCHRIFT

(11) **EP 3 342 929 B1**
(45) Veröffentlichungstag und Bekanntmachung des Hinweises auf die Patenterteilung: **12.12.2018**
(21) Anmeldenummer: 16207615.2
(22) Anmeldetag: 30.12.2016
(51) Int. Cl.: D21H 27/00, B32B 29/00, D21H 15/00, D21H 17/28, D21H 19/20, D21H 19/24, D21H 21/16, D21H 19/54, D21H 25/14

(54) **BARRIEREPAPIER**
BARRIER PAPER
PAPIER BARRIÈRE

(43) Veröffentlichungstag der Anmeldung: 04.07.2018
(73) Patentinhaber: Mitsubishi HiTec Paper Europe GmbH, 33699 Bielefeld (DE)
(72) Erfinder: Becker, Dieter, 49124 Georgsmarienhütte (DE); Eisernitz, Svenja, 24941 Flensburg (DE); Kalessios, Konstantinos, 60385 Frankfurt (DE); Lerius, Karsten, 24960 Munkbrarup (DE)
(74) Vertreter: Eisenführ Speiser

(56) Entgegenhaltungen:
- EP-A1- 1 044 822
- EP-A1- 2 551 407
- EP-A2- 1 433 899
- DE-A1-102014 114 668

## Beschreibung

Die vorliegende Erfindung betrifft ein Barrierepapier umfassend oder bestehend aus einen Papiersubstrat und einem Barrierestrich, die Verwendung eines erfindungsgemäßen Barrierepapiers zum Verpacken von Lebensmitteln und ein Verfahren zur Herstellung eines Barrierepapiers.

Lose angebotene Lebensmittel, wie Wurst-, Käse- oder Backwaren, werden aus Hygiene- oder Frischhaltegründen üblicherweise in einer Verpackung an Kunden übergeben. Hohe Anforderungen an die Verpackung werden dabei insbesondere bei fetthaltigen Lebensmitteln gestellt. Bei der Verwendung von herkömmlichen Verpackungen auf Basis von Papier kann bei fetthaltigen Lebensmitteln ein Durchdringen des Verpackungsmaterials mit dem Fett aus dem Lebensmittel erfolgen. Dies kann dazu führen, dass das Verpackungsmaterial aufweicht und reißt oder dass eine Verunreinigung von anderen Gegenständen mit dem Fett erfolgt, wenn Sie in Kontakt mit der Verpackung kommen.

Zur Verpackung von fetthaltigen Lebensmitteln wird häufig ein holzfreies, fettdichtes "Butterbrotpapier", verwendet, das aufgrund einer schmierigen Mahlung der Faserstoffe eine gewisse Fettbeständigkeit aufweist. Häufig reicht die Fettbeständigkeit allerdings nicht aus.

In der DE 10 2012 208 583 B3 wird ein Papier mit einem hohen Durchdringungswiderstand gegen Fette und Öle beschrieben, das gemahlene Zellstofffasern aufweist, wobei die Zellstofffasern auf einen Mahlgrad von mehr als 90°SR bis 100°SR ausgemahlen sind.

In der DE 10 2014 114 668 A1 wird ein Verbundpapier mit verbesserter Sauerstoffbarrierewirkung beschrieben. Das Verbundpapier umfasst eine Schicht aus Papier mit einem Flächengewicht zwischen 40 und 120 g/m², wobei das Papier Zellstofffasern aufweist, die einen Mahlgrad von mehr als 90°SR bis 100°SR ausgemahlen sind. Auf der Papierschicht ist eine Polymerschicht aufgebracht.

In der EP 1 044 822 A1 wird ein Dekorrohpapier mit Ink-Jet-Tintenaufnahmeschicht beschrieben. Das Dekorrohpapier umfasst ein Papiersubstrat aus Kurzfaser-Zellstoff und Langfaser-Zellstoff und ist mit einer Tintenaufnahmeschicht beschichtet.

In der EP2551407 A1 wird ein Filterhpllpapier für einen Rauchartikel beschrieben, das einen Anteil an Langfaserzellstoff von mindestens 30 Gew.-% aufweist. Der Mahlgrad des Langfaserzellstoffs beträgt zwischen 80°SR und 100°SR. Das beschriebene Filterhüllpapier hat einen Füllstoffgehalt von weniger als 10 Gew.-% und ist mit einem Material imprägniert, das geeignet ist eine wässrige Lösung oder Suspension zu bilden.

Als fettbeständigere Alternative zum Butterbrotpapier wird häufig ein Verbundpackstoff, d.h. Verbundstoff aus einem Papier und einer Kunststoff- oder Aluminiumfolie, verwendet. Diese Verbundstoffe zeichnen sich durch eine hohe Fettbeständigkeit aus. Diese Verbundpackstoffe können allerdings nicht ohne weiteres dem Papierrecycling zugeführt werden, da zunächst die Folienschicht aufwändig entfernt werden muss.

Aufgabe der vorliegenden Erfindung ist es, ein Barrierepapier für den Kontakt mit Lebensmitteln bereitzustellen, das eine hohe Beständigkeit gegen Fette und/oder Öle und/oder Feuchtigkeit aufweist und bei dem es sich nicht um ein Verbundpackstoff handelt. Es ist zudem wünschenswert, wenn das Barrierepapier kostengünstig ohne spezielle Aufarbeitung (z. B. Abtrennen von Schichten) dem Papierrecycling zugeführt werden kann.

Diese Aufgabe wird erfindungsgemäß gelöst durch ein Barrierepapier umfassend oder bestehend aus
a) einem Papiersubstrat,
   (a2) wobei das Papiersubstrat bei einem Druck (angegeben als sog. Linienlast in kN/m) von mindestens 40 kN/m und einer Temperatur von mindestens 25 °C kalandriert wurde;
      und
   (a3) wobei das Papiersubstrat auf einer oder auf beiden Seiten vollflächig mit Stärke imprägniert ist;
   und
b) einem Barrierestrich, der auf der einen oder auf beiden Seite(n) des Papiersubstrats vollflächig aufgebracht ist,
   wobei das Auftragsgewicht des Barrierestrichs einen Masseanteil von weniger als oder gleich 5 Gew.-% aufweist, bezogen auf das Gesamtgewicht des Barrierepapiers (lutro),
wobei das Flächengewicht des Barrierepapiers 30 bis 250 g/m² (lutro) beträgt.

Der Begriff "Barrierepapier" bezeichnet im Rahmen der vorliegenden Erfindung ein Spezialpapier, wobei das Barrierepapier beispielsweise durch seine Beschaffenheit und/oder Aufbau mit einer Barriere (d.h. ein Hindernis) gegen den unerwünschten Durchtritt bestimmter Stoffe wie beispielsweise mobile (z. B. Poren-mobile und/oder infolge von Kapillarkräften mobile) hydrophile und/oder hydrophobe, ggf. auch amphiphile, Stoffe ausgerüstet ist. Bevorzugt bezeichnet der Begriff "mobile Stoffe" üblicherweise in Lebensmitteln enthaltene Stoffe wie z. B. Fett und/oder Öl und/oder Feuchtigkeit. Insbesondere bezeichnet der Begriff "Barrierepapier" somit hochfettdichte und/oder wasser- bzw. feuchtigkeitsdichte Barrierepapiere für Lebensmittelanwendungen. Spezialpapiere werden hierbei vom Fachmann grundsätzlich in "ungestrichene" Papiere (beispielsweise im Rahmen der vorliegenden Erfindung z. B. das Papiersubstrat) und in "gestrichene" Papiere (beispielsweise im Rahmen der vorliegenden Erfindung z. B. das Barrierepapier umfassend einen "Barrierestrich") unterschieden werden.

Der Begriff "Barrierestrich" bezeichnet im Rahmen der vorliegenden Erfindung somit eine auf ein Papiersubstrat (einseitig oder beidseitig) aufgebrachte Beschichtung (fachsprachlich als "Strich" bezeichnet), durch die das Papiersubstrat zum Barrierepapier veredelt wird, indem der Barrierestrich den Durchtritt eines vorgenannten mobilen Stoffes, insbesondere von Fett und/oder Öl und/oder Feuchtigkeit, durch das Papier, d.h. durch das Barrierepapier, verhindert. Das Aufbringen dieser Beschichtung, d.h. des Barrierestrich wird fachsprachlich auch als "streichen" und die aufzutragende Beschichtung als "Streichfarbe" bezeichnet.

Überraschenderweise hat es sich gezeigt, dass ein erfindungsgemäßes Barrierepapier eine sehr hohe Beständigkeit gegenüber Fett und/oder Öl und/oder Feuchtigkeit aufweist, ohne dass es sich bei dem erfindungsgemäßen Barrierepapier um einen Verbundpackstoff handelt. Durch die Ausgestaltung des Papiersubstrats, das Kalandrieren des Papiersubstrats und/oder das Imprägnieren des Papiersubstrates mit Stärke ist es möglich, dass der Barrierestrich und somit das resultierende Barrierepapier trotz des geringen Auftragsgewichts des Barrierestrichs eine sehr hohe Barrierewirkung gegenüber Fett und/oder Öl und/oder Feuchtigkeit aufweist.

Ein Barierepapier ist erfindungsgemäß bevorzugt, wobei das Papiersubstrat einen Kurzfaser-Zellstoff mit einem Schopper-Riegler-Grad von mindestens 30°SR und einen Langfaser-Zellstoff mit einem Schopper-Riegler-Grad von mindestens 25°SR aufweist und wobei das Papiersubstrat mindestens 50 Gew.- % Kurzfaser-Zellstoff umfasst, bezogen auf das Gesamtgewicht aus Kurzfaser-Zellstoff und Langfaser-Zellstoff.

Im Rahmen der vorliegenden Erfindung wird der Schopper-Riegler-Grad (°SR) nach DIN ISO 5267-1 bestimmt.In einer Ausgestaltung des erfindungsgemäßen Barrierepapiers handelt es sich bei dem Papiersubstrat um ein Papiersubstrat,
(a1) das einen Kurzfaser-Zellstoff mit einem Schopper-Riegler-Grad von mindestens 30°SR und einen Langfaser-Zellstoff mit einem Schopper-Riegler-Grad von mindestens 25°SR aufweist und wobei das Papiersubstrat mindestens 50 Gew.- %
   Kurzfaser-Zellstoff umfasst, bezogen auf das Gesamtgewicht aus Kurzfaser-Zellstoff und Langfaser-Zellstoff;
   und
(a2) das bei einem Druck von mindestens 40 kN/m und einer Temperatur von mindestens 25 °C kalandriert wurde;
   und
(a3) das auf einer oder auf beiden Seiten vollflächig mit Stärke imprägniert ist.

Ein erfindungsgemäßes Barrierepapiers ist bevorzugt, wobei das Papiersubstrat, vorzugsweise das mit Stärke imprägnierte Papiersubstrat, ein Flächengewicht von 35 g/m² bis 45 g/m² (lutro) aufweist, vorzugsweise ein Flächengewicht von 39 g/m² bis 41 g/m² (lutro) aufweist.

Ein erfindungsgemäßes Barrierepapiers ist bevorzugt, wobei das Flächengewicht des Barrierepapiers 36 bis 47,4 g/m² (lutro) beträgt, vorzugsweise 40 bis 43,2 g/m² (lutro) beträgt.

Es hat sich in eigenen Untersuchungen gezeigt, dass ein erfindungsgemäßes Barrierepapier auch bei geringen Flächengewichten von ca. 40 g/m² des Papiersubstrats eine ausgesprochen hohe Barrierewirkung gegenüber Fett aufweist. Im Vergleich zu Papieren mit einem hohen Flächengewicht kann der Materialverbrauch signifikant reduziert werden. Dies führt zu einer Kostenersparnis und zu einer Reduzierung der Abfallmenge, die nach dem Verwenden des Barrierepapiers auftritt.

Erfindungsgemäß bevorzugt ist ein Barrierepapier, wobei die Stärkeimprägnierung ein Flächengewicht von 0,5 bis 4 g/m² (lutro) aufweist, vorzugsweise ein Flächengewicht von 1,5 bis 3 g/m² (lutro) aufweist.

Überraschenderweise hat es sich gezeigt, dass ein Barrierepapier, dessen Papiersubstrat mit den oben aufgeführten Flächengewichten mit Stärke imprägniert ist besonders gute Eigenschaften aufweist.

Erfindungsgemäß bevorzugt ist ein Barrierepapier, wobei der Kurzfaser-Zellstoff einen Schopper-Riegler-Grad von mindestens 35°SR aufweist, vorzugsweise von mindestens 39°SR und/oder der Langfaser-Zellstoff einen Schopper-Riegler-Grad von mindestens 30°SR aufweist, vorzugsweise von mindestens 33°SR aufweist.

Erfindungsgemäß bevorzugt ist ein Barrierepapier, wobei der Kurzfaser-Zellstoff einen Schopper-Riegler-Grad von maximal 70°SR aufweist, vorzugsweise von maximal 50°SR, besonders bevorzugt von maximal 41°SR und/oder der Langfaser-Zellstoff einen Schopper-Riegler-Grad von maximal 65°SR aufweist, vorzugsweise von maximal 45°SR, besonders bevorzugt von maximal 35°SR aufweist.

Erfindungsgemäß bevorzugt ist ein Barrierepapier, wobei der Kurzfaser-Zellstoff einen Schopper-Riegler-Grad im Bereich von 35°SR bis 70°SR aufweist, vorzugsweise im Bereich von 39°SR bis 50°SR aufweist, besonders bevorzugt im Bereich von 39°SR bis 41°SR aufweist und/oder der Langfaser-Zellstoff einen Schopper-Riegler-Grad im Bereich von 30°SR bis 65°SR aufweist, vorzugsweise im Bereich von 33°SR bis 45°SR aufweist, besonders bevorzugt im Bereich von 33°SR bis 35°SR aufweist.

Es hat sich in eigenen Untersuchungen gezeigt, dass die Kombination eines Kurzfaser-Zellstoffs und eines Langfaser-Zellstoffs mit den erfindungsgemäß eingesetzten Schopper-Riegler-Graden zu einem besonders dichtem Papier führt, dass eine sehr hohe Barrierewirkung gegenüber Fett aufweist. Diese Barrierewirkung kann noch weiter verbessert werden, wenn der Schopper-Riegler-Grad in den als bevorzugt oder besonders bevorzugt gekennzeichneten Bereichen liegt bzw. die als bevorzugt oder besonders bevorzugt gekennzeichneten Werte aufweist.

Erfindungsgemäß bevorzugt ist ein Barrierepapier, wobei das Papiersubstrat mindestens 70 Gew.- % Kurzfaser-Zellstoff umfasst, vorzugsweise zwischen 70 und 75 Gew.- % Kurzfaser-Zellstoff umfasst, bezogen auf das Gesamtgewicht aus Kurzfaser-Zellstoff und Langfaser-Zellstoff.

Es hat sich gezeigt, dass ein hoher Anteil an Kurzfaser-Zellstoff die Eigenschaften des resultierenden Barrierepapiers vorteilhaft beeinflusst. Insbesondere die Barrierewirkung gegenüber Fett kann hierdurch noch weiter verbessert werden.

In einer Ausgestaltung handelt es sich bei dem erfindungsgemäßen Barrierepapier um ein Barrierepapier, wobei der Kurzfaser-Zellstoff ganz oder teilweise, vorzugsweise zumindest zu mehr als 50 Gew.-%, bezogen auf die Gesamtmasse des Kurzfaser-Zellstoffs, aus Fasern von Laubhölzern besteht, vorzugsweise aus Birken-Fasern, Buchen-Fasern oder Eukalyptus-Fasern und der Langfaser-Zellstoff ganz oder teilweise, vorzugsweise zumindest zu mehr als 50 Gew.-%, bezogen auf die Gesamtmasse des Langfaser-Zellstoffs, aus Fasern von Nadelhölzern besteht, vorzugsweise aus Kiefern-Fasern, Fichten-Fasern oder Tannen-Fasern besteht,.

Erfindungsgemäß bevorzugt ist ein Barrierepapier, wobei das Flächengewicht des Barrierestrichs 1 bis 5 g/m² beträgt, vorzugsweise 1,5 bis 2,5 g/m² beträgt, bezogen auf das Gesamtgewicht des Barrierepapiers (lutro).

Erfindungsgemäß bevorzugt ist ein Barrierepapier, wobei das Papiersubstrat zusätzlich ein Retentionsmittel enthält, vorzugsweise Polyacrylamid. Im Rahmen dieser Erfindung wird unter einem Retentionsmittel ein Mittel verstanden, das den Siebvorgang während der Herstellung des Papiers beschleunigt.

Erfindungsgemäß bevorzugt ist ein Barrierepapier, wobei das Papiersubstrat zusätzlich ein AKD-Leimungsmittel und/oder ein Harz-Leimungsmittel enthält.

Ein erfindungsgemäßes Barrierepapiers ist bevorzugt, wobei das Papiersubstrat weniger als 5 Gew.% Füllstoffe enthält, vorzugsweise weniger als 3 Gew.-% Füllstoffe enthält, besonders bevorzugt weniger als 2 Gew.-% Füllstoffe enthält, bezogen auf das Gesamtgewicht des Barrierepapiers (lutro), insbesondere bevorzugt keine Füllstoffe enthält.

Im Rahmen der vorliegenden Erfindung werden unter Füllstoffen wasserunlösliche anorganische Teilchen verstanden, die sich im Papiergewebe zwischen den Fasern einlagern. Insbesondere Kaolin, Talkum, Carbonate (wie Kreide) und Oxide (wie Titandioxid) fallen in die Gruppe der Füllstoffe.

Erfindungsgemäß bevorzugt ist ein Barrierepapier, wobei der Barrierestrich zumindest eine der Komponenten umfasst ausgewählt aus der Gruppe bestehend aus Poly(Meth)acrylat, Polyacrylat, Polystyrol, Polybutadien, Polyethylen, Polyvinylacetat, Polyvinylalkohol, Polyacrylnitril, Polyacrylsäureester, natürliches Wachs, synthetisches Wachs und Mischungen aus diesen Komponenten.

Erfindungsgemäß bevorzugt ist ein Barrierepapier, wobei das Papiersubstrat eine Luftdurchlässigkeit nach Bendtsen von weniger als 80 mL/min, vorzugsweise weniger als 50 mL/min, besonders bevorzugt weniger als 30 mL/min aufweist.

Es hat sich überraschenderweise gezeigt, dass die Barrierewirkung des resultierenden Barrierepapiers gegenüber Fetten proportional zur Luftdurchlässigkeit des Papieres ist.

Erfindungsgemäß bevorzugt ist ein Barrierepapier, wobei es sich bei der Stärke um modifizierter Stärke, vorzugsweise oxidierter Stärke, besonders bevorzugt oxidierter Kartoffelstärke handelt.

Erfindungsgemäß bevorzugt ist ein Barrierepapier, wobei das Papiersubstrat vor und/oder nach dem Imprägnieren mit Stärke einer Satinage unterzogen wird, vorzugsweise mittels Kalander, besonders bevorzugt mittels Multinip-Kalander.

Erfindungsgemäß bevorzugt ist ein Barrierepapier, wobei das Barrierepapier eine Wasserdampfdurchlässigkeit nach DIN 53122-1 von kleiner gleich 300 g/(m²d) aufweist, vorzugsweise kleiner gleich 250 g/(m²d), besonders bevorzugt von kleiner gleich 150 g/(m²d).

Überraschenderweise hat es sich gezeigt, dass das erfindungsgemäße Barrierepapier nicht nur eine sehr hohe Beständigkeit gegenüber Fett, sondern auch eine geringe Wasserdampfdurchlässigkeit aufweist. Eine geringe Wasserdampfdurchlässigkeit bei Verpackungen ist bei Lebensmitteln erwünscht, da die eingepackten Lebensmittel nicht vorzeitig austrocknen und länger frisch bleiben.

Erfindungsgemäß bevorzugt ist ein Barrierepapier, wobei das Barrierepapier einen KIT-Wert von mindestens 5, vorzugsweise von mindestens 8, besonders bevorzugt von mindestens 12 aufweist; gemessen nach Methode Tappi 559.

Erfindungsgemäß bevorzugt ist ein Barrierepapier, wobei das Barrierepapier eine Fettdurchlässigkeit von mindestens Level 5, vorzugsweise von mindestens Level 3, besonders bevorzugt von mindestens Level 1 aufweist; gemessen nach Methode DIN 53116.

Erfindungsgemäß bevorzugt ist ein Barrierepapier, wobei das Barrierepapier eine Ölundurchlässigkeit von mindestens 300 s, vorzugsweise von mindestens 900 s, besonders bevorzugt von mindestens 1800 s aufweist; gemessen nach Methode Tappi 454.

Erfindungsgemäß bevorzugt ist ein Barrierepapier, wobei das Barrierepapier eine Porosität von weniger als 100 ml/min, vorzugsweise weniger als 50 ml/min, besonders bevorzugt weniger als 20 ml/min aufweist; gemessen nach Methode DIN 53120, entsprechend zu ISO 5627.

Erfindungsgemäß bevorzugt ist ein Barrierepapier, wobei das Barrierepapier eine Glätte nach Bekk von 40 bis 120 s aufweist, vorzugweise 80 bis 120 s aufweist; gemessen nach Methode DIN 53107.

Erfindungsgemäß bevorzugt ist ein Barrierepapier zur Verwendung als Einschlagpapier, Unterlegpapier, Zwischen- und/oder Trennpapier für Lebensmittel, vorzugsweise zum Verpacken von Backwaren, Sandwiches, Brot, Burgern, Fleischwaren, Wurstwaren und/oder Käse.

Erfindungsgemäß bevorzugt ist ein Barrierepapier, wobei sämtliche Inhaltsstoffe des Papiers gemäß
- der Empfehlung XXXVI Stand 01.07.2015 vom Deutschen Bundesinstitut für Risikobewertung,
- der Verordnung (EG) Nr. 1935/2004 DES EUROPÄISCHEN PARLAMENTS UND DES RATES vom 27. Oktober 2004 über Materialien und Gegenstände, die dazu bestimmt sind, mit Lebensmitteln in Berührung zu kommen,
- Swiss Ordinance on Materials and Articles in Contact with Food
- FDA21 CFR 176.170 und 176.180
- GB9685 positive list
für den Lebensmittelkontakt zugelassen sind.

Ein weiterer Aspekt der vorliegenden Erfindung betrifft die Verwendung eines erfindungsgemäßen Barrierepapiers als Einschlagpapier, Unterlegpapier, Zwischen- und/oder Trennpapier für Lebensmittel, vorzugsweise zum Einwickeln, Unterlegen, Zwischenlegen und/oder Trennen von Backwaren, gebratener und/oder fritierter Waren, Snackwaren, Sandwiches, Brot, Burgern, Fleischwaren, Wurstwaren und/oder Käse.

Ein weiterer Aspekt der vorliegenden Erfindung betrifft die Verwendung eines erfindungsgemäßen Barrierepapiers zum Verpacken von Lebensmitteln, vorzugsweise zum Verpacken von fetthaltigen Lebensmitteln, wobei das Barrierepapier das Fett des Lebensmittels abweist.

Ein weiterer Aspekt der vorliegenden Erfindung betrifft ein Verfahren zur Herstellung eines Barrierepapiers, vorzugsweise eines erfindungsgemäßen Barrierepapiers, umfassend die folgenden Schritte
(i) Herstellen oder Bereitstellen einer Mischung aus Kurzfaser-Zellstoff und/oder Kurzfaser Zellstoff, vorzugsweise aus einem Kurzfaser-Zellstoff mit einem Schopper-Riegler-Grad von mindestens 30°SR und einem Langfaser-Zellstoff mit einen Schopper-Riegler-Grad von mindestens 25°SR,
(ii) Herstellen eines Papiersubstrats der in Schritt (i) hergestellten oder bereitgestellten Mischung,
(iii) optionale Satinage des hergestellten Papiersubstrats,
(iv) optionales Imprägnieren von einer oder beiden Seiten des Papiersubstrat mit Stärke und anschließendes Trocknen des imprägnierten Papiersubstrats,
(v) Satinage des hergestellten imprägnierten Papiersubstrats, vorzugsweise mittels Kalander bei einem Druck von mindestens 40 kN/m und einer Temperatur von mindestens 25 °C,
(vi) Auftragen eines Barrierestrichs auf die eine oder die beiden mit Stärke imprägnierten Seiten(n) des Papiersubstrats und anschließendes Trocknen der Barriereschicht.

Ein erfindungsgemäßes Verfahren ist bevorzugt, wobei die Trocknung in Schritt (vi) mittels IR-Trocknung und/oder Lufttrocknung erfolgt.

Ein erfindungsgemäßes Verfahren ist bevorzugt, wobei das Imprägnieren mit Stärke und/oder der der Auftrag der Barriereschicht mittels Rakel, Curtain oder Luftbürste erfolgt.

Ein erfindungsgemäßes Verfahren ist bevorzugt, wobei die Satinage mittels Kalander erfolgt, vorzugweise mittels Softnip-Kalander, vorzugsweise bei einer Temperatur zwischen 25°C und 120°C, vorzugsweise zwischen 50°C und 120°C , besonders bevorzugt zwischen 80°C und 120°C und/oder einem Druck zwischen 20 und 250 kN/m, vorzugsweise zwischen 40 und 200 kN/m.

Durch das Kalandrieren bei diesen Bedingungen ist es möglich das das Papiersubstrat zu glätten und zu verdichten, sodass die Oberflächeneigenschaften des resultierenden Papiersubstrats verbessert werden. Insbesondere zeigt das Papiersubstrat und das daraus hergestellte Barrierepapier nach dem Kalandrieren einen höheren Gland und eine erhöhte Glätte bei gleichzeitiger Dickenreduzierung des Papiersubstrats. Durch Variation von Druck, Temperatur und der Walzengeschwindigkeit während des Kalandrierens lassen sich verschiedene Effekte erzielen. Der Kalander befinden sich außerhalb der Papiermaschine (offline) bzw. innerhalb der Papiermaschine zwischen Trockenpartie und Aufrollung (online).

Ein erfindungsgemäßes Verfahren ist bevorzugt, wobei das Imprägnieren in Schritt (iv) mit einer wässrigen Stärkelösung mit einem Feststoffgehalt von mindestens 7 Gew.-%, vorzugsweise mindestens 15 Gew.-%, besonders bevorzugt mindestens 20 Gew.-% erfolgt, bezogen auf das Gesamtgewicht der Stärkelösung, und/oder einer wässrigen Stärkelösung mit einem Feststoffgehalt von maximal 25 Gew.-%, bezogen auf das Gesamtgewicht der Stärkelösung.

Ein erfindungsgemäßes Verfahren ist bevorzugt, wobei das Imprägnieren in Schritt (iv) mit einer wässrigen Stärkelösung mit einem Viskosität in Bereich von 50 mPas bis 1000 mPas, vorzugsweise im Bereich von 500 bis 600 mPas erfolgt.

Ein weiterer Aspekt der vorliegenden Erfindung betrifft ein erfindungsgemäßes Barrierepapier, herstellbar durch ein erfindungsgemäßes Verfahren.

Im Rahmen der vorliegenden Erfindung werden vorzugsweise mehrere der vorstehend als bevorzugt bezeichneten Aspekte gleichzeitig verwirklicht; insbesondere bevorzugt sind die sich aus den beigefügten Ansprüchen ergebenden Kombinationen solcher Aspekte und der entsprechenden Merkmale.

Die Erfindung wird nachstehend anhand von Beispielen weiter erläutert.

### Beispiele:

### Vergleichsbeispiel 1:

Als Papiersubstrat wurde aus Kurzfaserstoffen (100 % Kurzfaserzellstoff) mit einer Mahlung von 50°SR und einem Zusatz von 1 Gew.-% Talkum als Füllstoff, bezogen auf das Gesamtgewicht des Papiersubstrats, auf einer Papiermaschine eine in der Masse mit Harz-Leimung versehene Papierbahn mit einer flächenbezogenen Masse von 33,3 g/m² hergestellt. Das hergestellte Papiersubstrat wurde bei einer Linienlast von 100kN/m und einer Temperatur von 100°C kalandriert.

Mittels eines Curtain-Coaters wurde frontseitig ein Barrierestrich, bestehend aus Poly(meth)acrylat, mit einem Auftragsgewicht von 1,7 g/m² (otro) aufgetragen und der Barrierestrich wurde anschließend mittels IR und Lufttrocknung getrocknet.

Das resultierende Barrierepapier wies ein Flächengewicht von 35 g/m² auf und wurde auf seine Eigenschaften vermessen. Die Ergebnisse sind in Tabelle 1 zusammengefasst.

**Tabelle 1**

| | Wert | Bestimmungsmethode |
|---|---|---|
| Wasserdampfdurchlässigkeit: | 300 g/(m²*d) | DIN 53122-1 |
| KIT-Wert: | 5 | Tappi 559 |
| Fettdurchlässigkeitsprüfung mit Palmkernfett: | Level 3 | DIN 53116 |
| Fettdurchlässigkeitsprüfung mit Terpentinöl: | > 1000 s | Tappi 454 |
| Porosität: | 5 ml/min | ISO 5627 |
| Glätte nach Bekk: | 120 s | DIN 53107 |

### Beispiel 1:

Als Papiersubstrat wurde aus Kurzfaserzellstoff mit einer Mahlung von 45°SR und Langfaserzellstoff mit einer Mahlung von 30°SR in einem Gewichtsverhältnis von 70 : 30 (Kurzfaserstoff zu Langfaserstoff) und einem Zusatz von 1 Gew.-% Talkum als Füllstoff, bezogen auf das Gesamtgewicht des Papiersubstrats, auf einer Papiermaschine eine in der Masse mit Harzleimung versehene Papierbahn mit einer flächenbezogenen Masse von 45,5 g/m² hergestellt und mit einem Auftragsgewicht von 2 g/m² mit Stärke imprägniert. Das hergestellte mit Stärke imprägnierte Papiersubstrat wurde bei einer Linienlast von 100kN/m und einer Temperatur von 30°C kalandriert.

Mittels eines Curtain-Coaters wurde frontseitig ein Barrierestrich, bestehend aus Poly(meth)acrylat, mit einem Auftragsgewicht von 2,5 g/m² (otro) aufgetragen und der Barrierestrich wurde anschließend mittels IR und Lufttrocknung getrocknet.

Das resultierende Barrierepapier wies ein Flächengewicht von 50 g/m² auf und wurde auf seine Eigenschaften vermessen. Die Ergebnisse sind in Tabelle 2 zusammengefasst.

**Tabelle 2**

| | Wert | Bestimmungsmethode |
|---|---|---|
| Wasserdampfdurchlässigkeit: | 80 g/(m²*d) | DIN 53122-1 |
| KIT-Wert: | >12 | Tappi 559 |
| Fettdurchlässigkeitsprüfung mit Palmkernfett: | Level 1 | DIN 53116 |
| Fettdurchlässigkeitsprüfung mit Terpentinöl: | > 1800 s | Tappi 454 |
| Porosität: | < 1 ml/min | ISO 5627 |
| Glätte nach Bekk: | 300 s | DIN 53107 |

### Beispiel 2:

Als Papiersubstrat wurde aus Kurzfaserzellstoff mit einer Mahlung von 45°SR und Langfaserzellstoff mit einer Mahlung von 35°SR in einem Gewichtsverhältnis von 4 : 1 (Kurzfaserzellstoff zu Langfaserzellstoff) und einem Zusatz von 1 Gew.-% Talkum als Füllstoff, bezogen auf das Gesamtgewicht des Papiersubstrats, auf einer Papiermaschine eine in der Masse mit AKD-Leimungsmittel enthaltene Papierbahn hergestellt und mit einem Auftragsgewicht von 3 g/m² mit Stärke imprägniert. Das hergestellte mit Stärke imprägnierte Papiersubstrat wurde bei einer Linienlast von 70 kN/m und einer Temperatur von 30°C kalandriert.

Mittels eines Lüftbürsten-Coaters wurde frontseitig ein Barrierestrich, bestehend aus einem Ethylen/Acrylsäure-Copolymer, mit einem Auftragsgewicht von 2,2 g/m² (otro) aufgetragen und anschließend wurde der Barrierestrich mittels IR und Lufttrocknung getrocknet.

Das resultierende Barrierepapier wies ein Flächengewicht von 45 g/m² auf und wurde auf seine Eigenschaften vermessen. Die Ergebnisse sind in Tabelle 3 zusammengefasst.

**Tabelle 3**

| | Wert | Bestimmungsmethode |
|---|---|---|
| Wasserdampfdurchlässigkeit: | 150 g/(m²*d) | DIN 53122-1 |
| KIT-Wert: | >12 | Tappi 559 |
| Fettdurchlässigkeitsprüfung mit Palmkernfett: | Level 1 | DIN 53116 |
| Fettdurchlässigkeitsprüfung mit Terpentinöl: | > 1800 s | Tappi 454 |
| Porosität: | < 1 ml/min | ISO 5627 |
| Glätte nach Bekk: | 250 s | DIN 53107 |

## Patentansprüche

1. Barrierepapier umfassend oder bestehend aus
a) einem Papiersubstrat,
(a2) wobei das Papiersubstrat bei einem Druck von mindestens 40 kN/m und einer Temperatur von mindestens 25 °C kalandriert wurde;
und
(a3) wobei das Papiersubstrat auf einer oder auf beiden Seiten vollflächig mit Stärke imprägniert ist;
und
b) einem Barrierestrich, der auf der einen oder auf beiden Seite(n) des Papiersubstrats vollflächig aufgebracht ist,
wobei das Auftragsgewicht des Barrierestrichs einen Masseanteil von weniger als oder gleich 5 Gew.-% aufweist, bezogen auf das Gesamtgewicht des Barrierepapiers (lutro),
wobei das Flächengewicht des Barrierepapiers 30 bis 250 g/m² (lutro) beträgt.

2. Barrierepapier nach Anspruch 1, wobei das Papiersubstrat einen Kurzfaser-Zellstoff mit einem Schopper-Riegler-Grad von mindestens 30°SR und einen Langfaser-Zellstoff mit einem Schopper-Riegler-Grad von mindestens 25°SR aufweist und wobei das Papiersubstrat mindestens 50 Gew.- % Kurzfaser-Zellstoff umfasst, bezogen auf das Gesamtgewicht aus Kurzfaser-Zellstoff und Langfaser-Zellstoff.

3. Barrierepapier nach einem der vorherigen Ansprüche, wobei das Flächengewicht des Barrierepapiers 36 bis 47,4 g/m² (lutro) beträgt, vorzugsweise 40 bis 43,2 g/m² (lutro) beträgt.

4. Barrierepapier nach einem der vorherigen Ansprüche, wobei
(A) der Kurzfaser-Zellstoff einen Schopper-Riegler-Grad von mindestens 35°SR aufweist, vorzugsweise von mindestens 39°SR und/oder der Langfaser-Zellstoff einen Schopper-Riegler-Grad von mindestens 30°SR aufweist, vorzugsweise von mindestens 33°SR aufweist
und/oder
(B) der Kurzfaser-Zellstoff einen Schopper-Riegler-Grad von maximal 70°SR aufweist, vorzugsweise von maximal 50 °SR, besonders bevorzugt von maximal 41°SR und/oder der Langfaser-Zellstoff einen Schopper-Riegler-Grad von maximal 65°SR aufweist, vorzugsweise von maximal 45 °SR, besonders bevorzugt von maximal 35 °SR.

5. Barrierepapier nach einem der vorherigen Ansprüche, wobei das Papiersubstrat mindestens 70 Gew.- % Kurzfaser-Zellstoff umfasst, vorzugsweise zwischen 70 und 75 Gew.- % Kurzfaser-Zellstoff umfasst, bezogen auf das Gesamtgewicht aus Kurzfaser-Zellstoff und Langfaser-Zellstoff.

6. Barrierepapier nach Anspruch 1, wobei das Flächengewicht des Barrierestrichs 1 bis 5 g/m² beträgt, vorzugsweise 1,5 bis 2,5 g/m² beträgt, bezogen auf das Gesamtgewicht des Barrierepapiers (lutro).

7. Barrierepapier nach einem der vorherigen Ansprüche, wobei das Papiersubstrat weniger als 5 Gew.-% Füllstoffe enthält, vorzugsweise weniger als 3 Gew.-% Füllstoffe enthält, besonders bevorzugt weniger als 2 Gew.-% Füllstoffe enthält, bezogen auf das Gesamtgewicht des Barrierepapiers (lutro), insbesondere bevorzugt keine Füllstoffe enthält.

8. Barrierepapier nach einem der vorherigen Ansprüche, wobei die Stärkeimprägnierung ein Flächengewicht von 0,5 bis 4 g/m² (lutro) aufweist, vorzugsweise ein Flächengewicht von 1,5 bis 3 g/m² (lutro) aufweist.

9. Barrierepapier nach einem der vorherigen Ansprüche, wobei der Barrierestrich zumindest eine der Komponenten umfasst ausgewählt aus der Gruppe bestehend aus Poly(Meth)acrylat, Polyacrylat, Polystyrol, Polybutadien, natürliches Wachs, synthetisches Wachs und Mischungen aus diesen Komponenten.

10. Barrierepapier nach einem der vorherigen Ansprüche, wobei das der Barrierestrich ein Wachs und ein (Meth)acrylat-Polymer umfasst.

11. Barrierepapier nach einem der vorherigen Ansprüche, wobei das Papiersubstrat eine Luftdurchlässigkeit nach Bendtsen von weniger als 80 mL/min, vorzugsweise weniger als 50 mL/min, besonders bevorzugt weniger als 30 mL/min aufweist.

12. Barrierepapier nach einem der vorherigen Ansprüche, wobei es sich bei der Stärke um modifizierter Stärke, vorzugsweise oxidierter Stärke, besonders bevorzugt oxidierter Kartoffelstärke handelt.

13. Barrierepapier nach einem der vorherigen Ansprüche, wobei das Barrierepapier eine Wasserdampfdurchlässigkeit nach DIN 53122-1 von kleiner gleich 300 g/(m²d) aufweist, vorzugsweise kleiner gleich 250 g/(m²d), besonders bevorzugt von kleiner gleich 150 g/(m²d).

14. Barrierepapier nach einem der vorherigen Ansprüche, wobei das Barrierepapier einen KIT-Wert von mindestens 5, vorzugsweise von mindestens 8, besonders bevorzugt von mindesten 12 aufweist.

15. Verwendung eines Barrierepapiers nach einem der Ansprüche 1 bis 14 als Einschlagpapier, Unterlegpapier, Zwischen- und/oder Trennpapier für Lebensmittel, vorzugsweise zum Einwickeln, Unterlegen, Zwischenlegen und/oder Trennen von Backwaren, gebratener und/oder fritierter Waren, Snackwaren, Sandwiches, Brot, Burgern, Fleischwaren, Wurstwaren und/oder Käse.

16. Verfahren zur Herstellung eines Barrierepapiers, vorzugsweise eines Barrierepapiers nach einem der Ansprüche 1 bis 14, umfassend die folgenden Schritte
(i) optionales Herstellen oder Bereitstellen einer Mischung aus einem Kurzfaser-Zellstoff mit einem Schopper-Riegler-Grad von mindestens 30°SR und einem Langfaser-Zellstoff mit einem Schopper-Riegler-Grad von mindestens 25 °SR,
(ii) Herstellen eines Papiersubstrats aus einer wie in (i) definierten Mischung und/oder aus der in (i) hergestellten oder bereitgestellten Mischung,
(iii) optionale Satinage des hergestellten Papiersubstrats,
(iv) Imprägnieren von einer oder beiden Seiten des Papiersubstrats mit Stärke und anschließendes Trocknen des imprägnierten Papiersubstrats,
(v) Satinage des hergestellten imprägnierten Papiersubstrats,
(vi) Auftragen eines Barrierestrichs auf die eine oder die beiden mit Stärke imprägnierten Seiten(n) des Papiersubstrats und anschließendes Trocknen der Barriereschicht.

## Claims

1. Barrier paper comprising or consisting of
a) a paper substrate,
(a2) wherein the paper substrate has been calendered at a pressure of at least 40 kN/m and a temperature of at least 25°C;
and
(a3) wherein the paper substrate is impregnated with starch all-over on one or on both sides;
and
b) a barrier coating which is applied all-over on the one or on both side(s) of the paper substrate,
wherein the application weight of the barrier coating has a mass proportion of less than or equal to 5 wt.%, relative to the total weight of the barrier paper (air dried),
wherein the weight per unit area of the barrier paper is 30 to 250 g/m² (air dried).

2. Barrier paper according to Claim 1, wherein the paper substrate has a short-fibre pulp with a Schopper-Riegler freeness of at least 30°SR and a long-fibre pulp with a Schopper-Riegler freeness of at least 25°SR and wherein the paper substrate comprises at least 50 wt.% of short-fibre pulp, relative to the total weight of short-fibre pulp and long-fibre pulp.

3. Barrier paper according to one of the previous claims, wherein the weight per unit area of the barrier paper is 36 to 47.4 g/m² (air dried), preferably is 40 to 43.2 g/m² (air dried).

4. Barrier paper according to one of the previous claims, wherein
(A) the short-fibre pulp has a Schopper-Riegler freeness of at least 35°SR, preferably of at least 39°SR and/or the long-fibre pulp has a Schopper-Riegler freeness of at least 30°SR, preferably has of at least 33°SR
and/or
(B) the short-fibre pulp has a Schopper-Riegler freeness of maximum 70°SR, preferably of maximum 50°SR, particularly preferably of maximum 41°SR and/or the long-fibre pulp has a Schopper-Riegler freeness of maximum 65°SR, preferably of maximum 45°SR, particularly preferably of maximum 35°SR.

5. Barrier paper according to one of the previous claims, wherein the paper substrate comprises at least 70 wt.% of short-fibre pulp, preferably comprises between 70 and 75 wt.% of short-fibre pulp, relative to the total weight of short-fibre pulp and long-fibre pulp.

6. Barrier paper according to Claim 1, wherein the weight per unit area of the barrier coating is 1 to 5 g/m², preferably is 1.5 to 2.5 g/m², relative to the total weight of the barrier paper (air dried).

7. Barrier paper according to one of the previous claims, wherein the paper substrate contains less than 5 wt.% of fillers, preferably contains less than 3 wt.% of fillers, particularly preferably contains less than 2 wt.% of fillers, relative to the total weight of the barrier paper (air dried), in particular preferably contains no fillers.

8. Barrier paper according to one of the previous claims, wherein the starch impregnation has a weight per unit area of 0.5 to 4 g/m² (air dried), preferably has a weight per unit area of 1.5 to 3 g/m² (air dried).

9. Barrier paper according to one of the previous claims, wherein the barrier coating comprises at least one of the components selected from the group consisting of poly(meth)acrylate, polyacrylate, polystyrene, polybutadiene, natural wax, synthetic wax and mixtures of these components.

10. Barrier paper according to one of the previous claims, wherein the the barrier coating comprises a wax and a (meth)acrylate polymer.

11. Barrier paper according to one of the previous claims, wherein the paper substrate has an air permeability according to Bendtsen of less than 80 mL/minute, preferably less than 50 mL/minute, particularly preferably less than 30 mL/minute.

12. Barrier paper according to one of the previous claims, wherein the starch is modified starch, preferably oxidized starch, particularly preferably oxidized potato starch.

13. Barrier paper according to one of the previous claims, wherein the barrier paper has a water-vapour permeability according to DIN 53 122-1 of less than or equal to 300 g/(m²d), preferably less than or equal to 250 g/(m²d), particularly preferably of less than or equal to 150 g/(m²d).

14. Barrier paper according to one of the previous claims, wherein the barrier paper has a KIT value of at least 5, preferably of at least 8, particularly preferably of at least 12.

15. Use of a barrier paper according to one of Claims 1 to 14 as wrapping paper, lining paper, interleaving paper and/or separating paper for foodstuffs, preferably for wrapping, lining, interleaving and/or separating baked goods, fried and/or deep-fried goods, snack goods, sandwiches, bread, burgers, meat products, sausages and/or cheese.

16. Method for producing a barrier paper, preferably a barrier paper according to one of Claims 1 to 14, comprising the following steps
(i) optional production or provision of a mixture of a short-fibre pulp with a Schopper-Riegler freeness of at least 30°SR and a long-fibre pulp with a Schopper-Riegler freeness of at least 25°SR,
(ii) production of a paper substrate from a mixture as defined in (i) and/or from the mixture produced or provided in (i),
(iii) optional calendering of the paper substrate produced,
(iv) impregnation of one or both sides of the paper substrate with starch and subsequent drying of the impregnated paper substrate,
(v) calendering of the impregnated paper substrate produced,
(vi) application of a barrier coating to the one or both side(s) of the paper substrate impregnated with starch and subsequent drying of the barrier layer.

## Revendications

1. Papier barrière, comprenant ou constitué de
a) un substrat de papier,
(a2) le substrat de papier ayant été calandré à une pression d'au moins 40 kN/m et à une température d'au moins 25° C ;
et
(a3) le substrat de papier étant imprégné d'amidon sur toute sa surface sur un ou sur les deux côtés ;
et
b) un trait de barrière qui est appliqué sur toute la surface sur le ou les deux côté(s) du substrat de papier,
le poids de revêtement du trait de barrière présentant une fraction massique inférieure ou égale à 5 %-poids, rapporté au poids total du papier barrière (lutro),
le grammage du papier barrière étant compris entre 30 et 250 g/m² (lutro).

2. Papier barrière selon la revendication 1, le substrat de papier comportant une cellulose à fibres courtes ayant un degré Schopper-Riegler d'au moins 30° SR et une cellulose à fibres longues ayant un degré Schopper-Riegler d'au moins 25° SR, et le substrat de papier comprenant au moins 50 %-poids de cellulose à fibres courtes, rapporté au poids total de cellulose à fibres courtes et de cellulose à fibres longues.

3. Papier barrière selon l'une des revendications précédentes, le grammage du papier barrière étant compris entre 36 et 47,4 g/m² (lutro), de préférence entre 40 et 43,2 g/m² (lutro).

4. Papier barrière selon l'une des revendications précédentes,
(A) la cellulose à fibres courtes présentant un degré Schopper-Riegler d'au moins 35° SR, de préférence d'au moins 39° SR et/ou la cellulose à fibres longues présentant un degré Schopper-Riegler d'au moins 30° SR, de préférence d'au moins 33° SR
et/ou
(B) la cellulose à fibres courtes présentant un degré Schopper-Riegler de 70° SR maximum, de préférence de 50° SR maximum, de façon particulièrement préférée de 41° SR maximum, et/ou la cellulose à fibres longues présentant un degré Schopper-Riegler de 65° SR maximum, de préférence de 45° SR maximum, de façon particulièrement préférée de 35° SR maximum.

5. Papier barrière selon l'une des revendications précédentes, le substrat de papier comprenant au moins 70 %-poids de cellulose à fibres courtes, de préférence entre 70 et 75 %-poids de cellulose à fibres courtes, rapporté au poids total de cellulose à fibres courtes et de cellulose à fibres longues.

6. Papier barrière selon la revendication 1, le grammage du trait de barrière étant compris entre 1 et 5 g/m², de préférence entre 1,5 et 2,5 g/m², rapporté au poids total du papier barrière (lutro).

7. Papier barrière selon l'une des revendications précédentes, le substrat de papier contenant moins de 5 %-poids de charges, contenant de préférence moins de 3 %-poids de charges, contenant de façon particulièrement préférée moins de 2 %-poids de charges, rapporté au poids total du papier barrière (lutro), en particulier de préférence ne contenant pas de charges.

8. Papier barrière selon l'une des revendications précédentes, l'imprégnation d'amidon présentant un grammage de 0,5 à 4 g/m² (lutro), de préférence un grammage de 1,5 à 3 g/m² (lutro).

9. Papier barrière selon l'une des revendications précédentes, le trait de barrière comprenant au moins un des composants sélectionné dans le groupe composé de poly(méth)acrylate, polyacrylate, polystyrène, polybutadiène, cire naturelle, cire synthétique et des mélanges de ces composants.

10. Papier barrière selon l'une des revendications précédentes, le trait de barrière comprenant une cire ou un polymère du (méth)acrylate.

11. Papier barrière selon l'une des revendications précédentes, le substrat de papier présentant une perméabilité à l'air selon Bendtsen inférieure à 80 mL/min, de préférence inférieure à 50 mL/min, de façon particulièrement préférée inférieure à 30 mL/min.

12. Papier barrière selon l'une des revendications précédentes, dans lequel, concernant l'amidon, il s'agit d'amidon modifié, de préférence d'amidon oxydé, de façon particulièrement préférée d'amidon de pommes de terre oxydé.

13. Papier barrière selon l'une des revendications précédentes, le papier barrière présentant une perméabilité à la vapeur d'eau selon DIN 53122-1 inférieure ou égale à 300 g/(m²d), de préférence inférieure ou égale à 250 g/(m²d), de façon particulièrement préférée inférieure ou égale à 150 g/(m²d).

14. Papier barrière selon l'une des revendications précédentes, le papier barrière présentant une valeur KIT d'au moins 5, de préférence d'au moins 8, de façon particulièrement préférée d'au moins 12.

15. Utilisation d'un papier barrière selon l'une des revendications 1 à 14 comme papier de protection, papier de support, papier d'interposition et/ou de séparation pour produits alimentaires, de préférence pour l'enroulement, le support, l'interposition et/ou la séparation de pâtisseries, de produits rôtis ou frits, d'en-cas, de sandwiches, de pains, de hamburgers, de viandes, de charcuteries et/ou de fromages.

16. Procédé de fabrication d'un papier barrière, de préférence d'un papier barrière selon l'une des revendications 1 à 14, comprenant les étapes suivantes :
(i) fabrication ou fourniture optionnelle d'un mélange d'une cellulose à fibres courtes ayant un degré Schopper-Riegler d'au moins 30° SR et d'une cellulose à fibres longues ayant un degré Schopper-Riegler d'au moins 25° SR,
(ii) fabrication d'un substrat de papier à partir d'un mélange tel que défini dans (i) et/ou du mélange fabriqué ou fourni dans (i),
(iii) satinage optionnel du substrat de papier fabriqué,
(iv) imprégnation d'un ou des deux côtés du substrat de papier avec de l'amidon et puis séchage du substrat de papier imprégné,
(v) satinage du substrat de papier imprégné fabriqué,
(vi) application d'un trait de barrière sur le ou les deux côté(s) imprégné(s) d'amidon du substrat de papier puis séchage de la couche barrière.
